# EUROPEAN PATENT SPECIFICATION

(11) **EP 3 904 170 B1**
(45) Date of publication and mention of the grant of the patent: **12.07.2023**
(21) Application number: 20171695.8
(22) Date of filing: 28.04.2020
(51) Int. Cl.: B60T 17/22

(54) **BRAKE OPERATION DEVICE**
BREMSBETÄTIGUNGSVORRICHTUNG
DISPOSITIF DE FONCTIONNEMENT DE FREIN

(43) Date of publication of application: 03.11.2021
(73) Proprietor: KNORR-BREMSE Systeme für Nutzfahrzeuge GmbH, 80809 München (DE)
(72) Inventor: KOKREHEL, Csaba, 1119 Budapest (HU); BUCH, Andreas, 82024 Taufkirchen (DE); NEMETH, Huba, 1116 Budapest (HU); PAHLE, Wolfgang, 83707 Bad Wiessee (DE); MLINARCSEK, Csaba, 1165 Budapest (HU); SZABO, Janos, 1042 Budapest (HU); BLESSING, Michael, 80687 München (DE); KISS, Dávid, 2066 Szár (HU); POUR, Benedek, 1141 Budapest (HU)

(56) References cited:
- WO-A1-2007/106014
- CN-U- 206 265 032
- DE-A1-102008 064 077
- US-A1- 2003 221 922
- US-B1- 6 286 911

## Description

The invention relates to a brake operation device for a vehicle. Today, electro-pneumatic brake actuators are commonly used in commercial vehicles. In most cases, these brake actuators use a pneumatic energy source via pneumatic cylinders in order to realize the actuation of both the service brake and the parking brake. The parking brake function is realized by using a separate brake actuator that can be operated independently of the service brake actuator. The design of a spring based parking brake actuator allows a single brake actuation to be achieved even without compressed air as the energy source for the actuation. In the event of a pressure loss in the brake system, a pre-tensioned spring in the parking brake chamber provides sufficient braking energy to stop the vehicle or keep it stationary. To make the vehicle towable if there is no compressed air supply on board the vehicle, the parking brake actuation must be released. In combined electro-pneumatic brake chambers, this release can be carried out with a threaded tool such as a threaded shaft. The threaded shaft projects outwards from the spring brake chamber and is accessible to an operator. The brake can be released by turning the shaft with an ordinary wrench.

In the future, electromechanical brake actuation will become more and more common. For these brakes, too, the requirement for external release capability should be met. In the event of a malfunction, e.g. if the parking brakes are applied and cannot be released on the normal operating route, a brake release solution is required to make the vehicle towable. Due to the complexity of the electromechanical brake cylinders, external brake release requires a special tool to release the parking brakes.

DE102008064077 (A1) relates to an actuating device for a parking brake of a vehicle, the vehicle having a service brake and the parking brake is configured to generate a first braking action independent of a braking process of the service brake, the actuating device comprising a manually actuatable control element for actuating the parking brake, the control element having a plurality of deflection positions, the actuating device being configured to assume (i) a first switching state in which the parking brake is released and the first braking action cannot be provided, (ii) a second switching state in which the parking brake is engaged and the first braking action can be provided, and (iii) a further switching state, wherein in a first deflection position when the parking brake is released the actuating device is switchable into the second switching state, and wherein when the parking brake is engaged the actuating device is switchable into the first switching state.

It is the object of the present invention to provide a brake operation device for a vehicle that can be used for operating a parking brake in emergency cases.

The object is achieved by a brake operation device for a vehicle comprising the features of claim 1. Embodiments of the invention are described in the dependent claims.

The device is capable for a use with electromechanical brakes of vehicles and can be embodied as a standalone device for operating a parking brake especially in emergency cases. The device can be directly connected to the wheel brake actuator of a vehicle via cables, such as power supply and control cables. The control module of the device can operate either a single wheel-end or multiple wheel-ends of the vehicle at the same time, by providing proper communication with the wheel brake actuators regardless if those are integrated in the wheel-ends or mounted separately elsewhere. Besides parking brake application and release and diagnostics of the wheel-ends the device is capable to perform a service brake operation as well. To operate the wheel-ends via the device the overall brake system is not required to be fully functional but at least the corresponding wheel brake.

According to an embodiment the control module of the device is configured to communicate with at least one module of at least one electro-mechanical brake actuator of the brake. The communication may include the transmission and receipt of messages and commands.

According to the invention the device comprises a power supply configured to be connected to the brake to supply a brake actuator of the brake with power. Hence, a brake of a vehicle can be released on a road remote from a fixed power supply even if power from the vehicle is not available.

According to the invention the device comprises a plug for an external power supply, the external power supply supplying power to at least one of the device and a brake actuator of the brake. This makes use of an external battery such as the battery of the vehicle possible to operate the brake, if the electromechanical brake system of the vehicle is not usable.

According to an embodiment the device comprises a memory storing one or more modes of operation from the group comprising a service brake operation mode, a parking brake operation mode, a diagnostics mode, a trouble codes delete mode, and other operation programs.

According to the invention the device comprises an output device such as a display or a speaker for outputting or showing an indication of a mode of operation of the device.

According to the invention the device comprises an interface device for receiving a user input. The interface device can be for example a switch, a touch display, a microphone, a keyboard or a microphone or a combination thereof.

According to still another embodiment the device is further configured to provide a wake-up signal to the brake. For some brakes sending of a wake-up signal may be necessary, before a communication between the device and the brake actuator or the brake is possible.

According to the invention also a computer-implemented method for controlling a brake of a vehicle is provided, wherein the method comprises connecting a brake operation device according to claim 1 to a brake actuator of the vehicle; on the brake operation device, selecting an operation mode of the brake operation device; the brake operation device sending a wake-up signal to the brake actuator; and the brake operation device sending a control signal to the brake actuator according to the selected mode, the control signal releasing the brake.

Further characteristics, features and advantages of the invention will result from the following description of an embodiment with reference to the annexed drawing in which:
- Fig. 1a, b: shows a schematic view of an embodiment of the emergency brake operating device with internal energy storage and supply in a side view (Fig. 1a) and from the top (Fig. 1b); and
- Fig. 2a, b: shows a schematic view of another embodiment of the emergency brake operating device for use with an external energy source in a side view (Fig. 2a and the top (Fig. 2b).

Embodiments of the brake operating device according to the invention are described. According to a first embodiment the brake operating device is implemented as a standalone apparatus with a housing 1 which accommodates a control module (not shown) and an energy storage such as a rechargeable battery (not shown). A handle 2 is mounted on the device to make it easily movable. For charging the internal energy storage a charging fuse 3 and charging plug-in connectors 4 are provided.

On the housing 1 a power output connector C and a control output connector B are mounted for a power and control connection with a wheel brake of a vehicle, respectively. Inside the device the control module is connected with the control output connector B. The brake operation device also has an additional external connector that permits connection of a computer for monitoring the operation of the device. The additional external connector is also connected to the control module. The control module may include a microprocessor or other IC.

Operation of the device can be such that the device in an emergency case in which a vehicle with locked brakes needs to be towed is connected to one or more brakes of the vehicle. In particular, a communication cable is connected between the control output connector B and the corresponding plug at the brake or brake actuator of the vehicle. Also a power cable can be connected between the power output C and a power supply plug of the vehicle, if power supply to the brake or brake actuator is necessary.

Actuation of the brake starts with an activation on the power output C by a user interface such as switch 8. The wake-up of the wheel brake is triggered by another user interface such as ignition switch 9. Then an appropriate operation mode of the device is selected. The operation mode change is handled by another user interface such as "Mode" button 5 which is connected to the control module. The operation mode can be one of the following modes: "service brake operation mode", "parking brake operation mode", "diagnostics mode", and "trouble codes delete mode". For activation of a brake, when the brake needs to be released without actuation of the brake through the vehicle, the appropriate mode of operation is the "parking brake operation mode".

Inside a mode, the intended activity can be performed by pressing the "Execute" button 6 that sends a corresponding signal to the control module which then conducts the operation of the brake of the vehicle automatically by sending respective control signals to the brake. At least some of the processes conducted by the device and the bake can be tracked on the display 7 of the emergency operation device. Once the brake has been released the device can be switched off and removed.

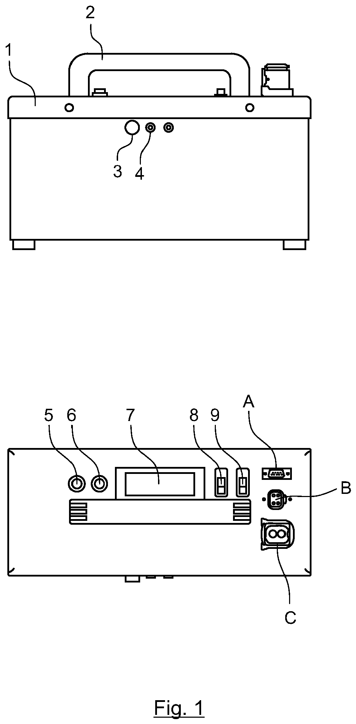

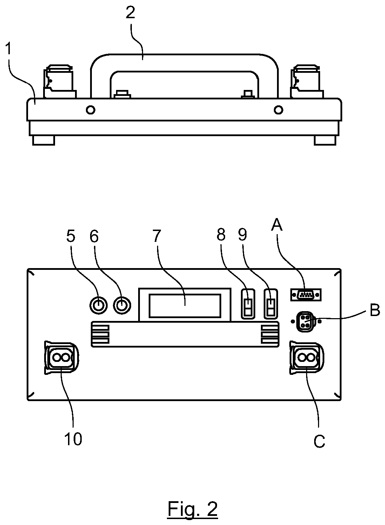

Figure 2a, b shows a brake operation device with no internal energy storage which is similar to the device shown in Fig. 1a, b. Contrary to the device of Fig. 1a, b the device of Fig. 2a, b has a dedicated power input connector 10 for connecting an external energy source. Otherwise the devices of both figures are equal.

Many modifications can be performed on the devices without leaving the scope of the invention.

### Reference numerals:

- 1: housing
- 2: handle
- 3: charging fuse
- 4: charging plug-in connectors
- 5: Mode button
- 6: Execute button
- 7: display
- 8: switch
- 9: ignition switch

## Claims

1. A brake operation device for actuating a brake of a vehicle, comprising:
a control module configured to control a brake of the vehicle;
a connector (B) connected to the control module for outputting a control signal from the control module for controlling the brake;
an interface (5, 6, 8, 9) connected to the control module for receiving a user input to the control module, a display (7) for displaying a mode of operation of the device; the brake operation device being **characterised by**
at least one of a power supply (C) configured to be connected to the brake to supply a brake actuator of the brake with power and a plug (10) for an external power supply, the external power supply supplying power to at least one of the device and the brake actuator of the brake.

2. The brake operation device according to claim 1, wherein the control module is configured to communicate with at least one module of at least one electro-mechanical brake actuator of the brake.

3. The brake operation device according to claim 1 or 2, further comprising a mode switch (5) configured to switch operation of the device between multiple modes of operation of the group including a service brake operation mode, a parking brake operation mode, a diagnostics mode, and a trouble codes delete mode.

4. The brake operation device according to one of claims 1 to 3, wherein the device is further configured to provide a wake-up signal to the brake.

5. A computer-implemented method for controlling a brake of a vehicle, the method comprising:
connecting the brake operation device according to any of claims 1-4 to a brake actuator of the vehicle;
on the brake operation device, selecting an operation mode of the brake operation device; and
the brake operation device sending a control signal to the brake actuator according to the selected mode, the control signal releasing the brake.

6. The method of claim 5, including the brake operation device sending a wake-up signal to the brake actuator.

## Patentansprüche

1. Bremsenbetriebsvorrichtung zum Betätigen einer Bremse eines Fahrzeugs, umfassend:
ein Steuermodul, ausgelegt zum Steuern einer Bremse des Fahrzeugs;
einen mit dem Steuermodul verbundenen Verbinder (B) zum Ausgeben eines Steuersignals von dem Steuermodul zur Steuerung der Bremse;
eine mit dem Steuermodul verbundene Schnittstelle (5, 6, 8, 9) zum Empfangen einer Benutzereingabe in das Steuermodul, eine Anzeige (7) zum Anzeigen eines Betriebsmodus der Vorrichtung; wobei die Bremsenbetriebsvorrichtung **gekennzeichnet ist durch**
eine Stromversorgung (C), die dafür ausgelegt ist, mit der Bremse verbunden zu werden, um eine Bremsenbetätigungsvorrichtung der Bremse mit Strom zu versorgen, und/oder einen Stecker (10) für eine externe Stromversorgung, wobei die externe Stromversorgung die Vorrichtung und/oder die Bremsenbetätigungsvorrichtung der Bremse mit Strom versorgt.

2. Bremsenbetriebsvorrichtung nach Anspruch 1, wobei das Steuermodul dafür ausgelegt ist, mit mindestens einem Modul mindestens einer elektromechanischen Bremsenbetätigungsvorrichtung der Bremse zu kommunizieren.

3. Bremsenbetriebsvorrichtung nach Anspruch 1 oder 2, die ferner einen Modusschalter (5) umfasst, der dafür ausgelegt ist, Betrieb der Vorrichtung zwischen mehreren Betriebsmodi der Gruppe umfassend einen Service-Bremsenbetriebsmodus, einen Park-Bremsenbetriebsmodus, einen Diagnostikmodus und einen Problemcode-Löschmodus, umzuschalten.

4. Bremsenbetriebsvorrichtung nach einem der Ansprüche 1 bis 3, wobei die Vorrichtung ferner dafür ausgelegt ist, der Bremse ein Aufwecksignal zuzuführen.

5. Computerimplementiertes Verfahren zur Steuerung einer Bremse eines Fahrzeugs, wobei das Verfahren Folgendes umfasst:
Verbinden der Bremsenbetriebsvorrichtung nach einem der Ansprüche 1-4 mit einer Bremsenbetätigungsvorrichtung des Fahrzeugs;
Wählen eines Betriebsmodus der Bremsenbetriebsvorrichtung auf der Bremsenbetriebsvorrichtung; und
die Bremsenbetriebsvorrichtung sendet ein Steuersignal zu der Bremsenbetätigungsvorrichtung gemäß dem ausgewählten Modus, wobei das Steuersignal die Bremse löst.

6. Verfahren nach Anspruch 5, umfassend: die Bremsenbetriebsvorrichtung sendet ein Aufwecksignal zu der Bremsenbetätigungsvorrichtung.

## Revendications

1. Dispositif pour faire fonctionner un frein, pour l'actionnement d'un frein d'un véhicule, comprenant :
un module de commande configuré pour commander un frein du véhicule ;
un connecteur (B) connecté au module de commande pour sortir un signal de commande du module de commande pour commander le frein ;
une interface (5, 6, 8, 9) connectée au module de commande pour recevoir une entrée d'utilisateur au module de commande, un affichage (7) pour afficher un mode de fonctionnement du dispositif, le dispositif de fonctionnement d'un frein étant **caractérisé par**
au moins l'une d'une alimentation (C) de puissance configurée pour être connectée au frein pour alimenter un actionneur du frein en puissance et une prise (10) pour une source de puissance extérieure, la source de puissance extérieure fournissant de la puissance à au moins l'un du dispositif et de l'actionneur du frein.

2. Dispositif pour faire fonctionner un frein suivant la revendication 1, dans lequel le module de commande est configuré pour communiquer avec au moins un module d'au moins un actionneur électromécanique du frein.

3. Dispositif pour faire fonctionner un frein suivant la revendication 1 ou 2, comprenant un commutateur (5) de mode configuré pour commuter un fonctionnement du dispositif entre de multiples modes de fonctionnement du groupe comprenant un mode de fonctionnement de frein de service, un mode de fonctionnement de frein de stationnement, un mode de diagnostic et un mode de suppression de code d'anomalie.

4. Dispositif pour faire fonctionner un frein suivant l'une des revendications 1 à 3, dans lequel le dispositif est configuré en outre pour fournir un signal d'éveil au frein.

5. Procédé mis en oeuvre par ordinateur pour commander un frein d'un véhicule, le procédé comprenant :
connecter le dispositif pour faire fonctionner un frein suivant l'une quelconque des revendications 1 à 4 à un actionneur de frein du véhicule ;
sur le dispositif pour faire fonctionner un frein, sélectionner un mode de fonctionnement du dispositif pour faire fonctionner un frein ; et
le dispositif pour faire fonctionner un frein envoyant un signal de commande à l'actionneur de frein suivant le mode sélectionné, le signal de commande desserrant le frein.

6. Procédé suivant la revendication 5, comprenant le fait que le dispositif pour faire fonctionner un frein envoie un signal d'éveil à l'actionneur de frein.
